Europäisches Patentamt

European Patent Office

Office européen des brevets

(19)

(11) Veröffentlichungsnummer : **0 088 269**
**B1**

(12) **EUROPÄISCHE PATENTSCHRIFT**

(45) Veröffentlichungstag der Patentschrift :
20.08.86

(21) Anmeldenummer : 83101602.7

(22) Anmeldetag : 19.02.83

(51) Int. Cl.⁴ : **C 09 D   5/28// C09D17/00**

(54) Lackierungsverfahren unter Verwendung von Perlglanzpigmenten.

(30) Priorität : 05.03.82 DE 3207936

(43) Veröffentlichungstag der Anmeldung :
14.09.83 Patentblatt 83/37

(45) Bekanntmachung des Hinweises auf die Patenterteilung : 20.08.86 Patentblatt 86/34

(84) Benannte Vertragsstaaten :
AT BE CH DE FR GB IT LI NL SE

(56) Entgegenhaltungen :
AT-B-  253 087
DE-A- 2 723 871
DE-A- 2 852 585
Die Akte enthält technische Angaben, die nach dem Eingang der Anmeldung eingereicht wurden und die nicht in dieser Patentschrift enthalten sind.

(73) Patentinhaber : Merck Patent Gesellschaft mit beschränkter Haftung
Frankfurter Strasse 250
D-6100 Darmstadt (DE)

Herberts Gesellschaft mit beschränkter Haftung
Christbusch 25
D-5600 Wuppertal 2 (DE)

(72) Erfinder : Esselborn, Reiner, Dr.
Küchlerstrasse 6
D-6100 Darmstadt (DE)
Erfinder : Ambrosius, Klaus, Dr.
Bergerstrasse 102
D-6000 Frankfurt a.M. (DE)
Erfinder : Graetz, Hans-Joachim, Dr.
Emanuel-Felke-Strasse 41
D-5600 Wuppertal 12 (DE)
Erfinder : Letsch, Manfred
Ursulastrasse 3
D-5600 Wuppertal (DE)

## Beschreibung

Die Erfindung betrifft ein Verfahren zum Lackieren von Objekten mit einer eine Basislack-Schicht und eine darauf befindliche Klarlack-Schicht enthaltenden Mehrschichtlackierung, wobei der Basislack zumindest ein Perlglanzpigment auf der Grundlage von mit Metalloxiden beschichteten Glimmerschuppen enthält.

Perlglanzpigmente werden bisher schon für eine Reihe von Anwendungen benutzt, insbesondere in der Kosmetik. Auch zur Verwendung in Autolacken wurden Perlglanzpigmente schon vorgeschlagen ; eine breite Durchsetzung auf diesem Gebiet konnte bischer jedoch nicht erzielt werden, obwohl Perlglanzpigmente aufgrund ihrer optischen Eigenschaften besonders interessante und ansprechende Lackierungen ermöglichen. Neben modischen Anschauungen ist der Grund dafür darin zu suchen, daß an Autolacke, die ihrer Bestimmung entsprechend über lange Zeiten z. T. extremen Witterungsbedingungen ausgesetzt sind, besonders hohe Qualitätsanforderungen gestellt werden müssen.

Die Farbigkeit der Perlglanzpigmente auf Basis von mit Metalloxiden beschichteten Glimmerschuppen beruht auf Interferenzerscheinungen bei der Reflexion des einfallenden Lichtes an der dünnen Metalloxidschicht. Da die Interferenz vom Winkel des einfallenden Lichts bzw. dem Betrachtungswinkel abhängig ist, muß eine möglichst parallele Ausrichtung der Pigmente in der Lackschicht erfolgen. Es ist außerdem bekannt, daß an jeder Ecke oder Kante eines Pigmentteilchens eine diffuse Lichtstreuung erfolgt, die zu einer Verweißlichung der Farbe und zu Einbußen an Glanz und Farbintensität führt. Sowohl die planparallele Ausrichtung der Pigmentteilchen, die im Augenblick der Aufbringung des Lackes auf die zu lackierende Oberfläche erfolgen muß, als auch Glanz und Farbkraft der Pigmente werden begünstigt, wenn Pigmentteilchen mit relativ großem Hauptdurchmesser verwendet werden.

Es wurden daher bisher in Lacken und Anstrichmitteln, in denen hoher Glanz und hohe Farbkraft erwünscht war, vor allem Perlglanzpigmente mit Teilchengrößen von etwa 10-70 μm verwendet, wobei die Hauptmenge der Teilchen in der Größenordnung von etwa 30 bis 50 μm lag. Obwohl diese Pigmente für sehr viele Anwendungen sehr gut geeignet sind, erhält man bei der Verwendung in Autolacken jedoch überraschenderweise keine guten Ergebnisse. Vielmehr ist bei Verwendung der in der Serienlackierung üblichen Polykondensationssysteme festzustellen, daß die Verwendung der üblichen Perlglanzpigmente zu Lacken mit schlechtem Klarlack-stand und relativ rauher und daher schlecht glänzender Oberfläche führt.

Es bestand daher die Aufgabe, Pigmente zu finden, die in Autolacke für die Serienlackierung eingearbeitet werden können und die insbesondere einen verbesserten Klarlackstand aufweisen.

Es wurde nun gefunden, daß diese Aufgabe durch die Verwendung von Perlglanzpigmenten mit einer Teilchengrößenverteilung, bei der die Teilchen im wesentlichen eine Größe von etwa 5 bis etwa 25 μm besitzen, gelöst werden kann. Dies ist überraschend, da bei der z. B. durch Spritzverfahren erfolgenden Aufbringung des Lackes Fließvorgänge in der Lackschicht, die zu einer Ausrichtung der Pigmentteilchen parallel zur Oberfläche führen müssen, nur für sehr kurze Zeit stattfinden. Es mußte daher befürchtet werden, daß bei kleineren Teilchen keine vollständige Orientierung mehr erfolgen würde, die Teilchen daher z. T. quer zur Oberfläche stehen würden, was zu einem teilweisen Herausstehen der Teilchen aus der Oberfläche und zu einem verschlechterten Klarlackstand führen würde. Tatsächlich beobachtet man jedoch das Gegenteil, nämlich einen gegenüber der Verwendung von größeren Teilchen deutlich verbesserten Klarlackstand.

In der DE-A1-2 852 858 sind Glimmerppigmente einer Teilchengröße von 1-70 μm, vorzugsweise 5-40 μm, beschrieben, die auch in Lacken eingesetzt werden können. Im Beispiel 1 dieser Anmeldung wird auch ein Einschichtlack mit einem solchen Pigment auf Stahlplatten gesprüht. In der DE-A1-2 852 858 findet sich jedoch kein Hinweis, daß in Mehrschichtlackierungen, wobei auf einer das Pigment enthaltenden Basislackschicht noch eine Klarlackschicht aufgebracht ist, durch Auswahl von Pigmenten einer speziellen Teilchengröße eine deutliche Verbesserung der Qualität der Lackierung erreicht werden kann. Insbesondere kann der DA-A1-2 852 858 keinerlei Hinweis auf die erfindungsgemäße Teilchengröße von 5-25 μm entnommen werden.

Gegenstand der Erfindung ist daher ein Verfahren zum Lackieren von Objekten mit einer eine Basislack-Schicht und eine darauf befindliche Klarlack-Schicht enthaltenden Mehrschichtlackierung, wobei der Basislack zumindest ein Perlglanzpigment auf der Grundlage von mit Metalloxiden beschichteten Glimmerschuppen enthält, dadurch gekennzeichnet, daß Perlglanzpigmente mit einer Teilchengröße im wesentlichen zwischen 5 und 25 mm enthalten sind.

Gegenstand der Erfindung ist auch ein Basislack für eine Mehrschichtlackierung, die eine Basislack-Schicht enthält, dadurch gekennzeichnet, daß er mit Perlglanzpigmenten auf der Grundlage von mit Metalloxiden beschichteten Glimmerschuppen einer Teilchengröße im wesentlichen zwischen 5 und 25 μm pigmentiert ist.

Gegenstand der Erfindung ist schließlich auch die Verwendung von Perlglanzpigmenten auf der Grundlage von mit Metalloxiden beschichteten Glimmerschuppen mit einer Teilchengröße von im wesentlichen zwischen 5 und 25 μm zur Pigmentierung von Basislacken für eine eine Basislack-Schicht und eine Klarlack-Schicht enthaltende Mehrschichtlackierung.

Hauptvorteil des erfindungsgemäßen Verfahrens ist der verbesserte Klarlackstand, der danach erzeugten Lackschichten. Wesentlich dafür ist neben der Verwendung der Pigmente mit kleiner Teilchengröße auch die Verwendung eines relativ engen Kornbandes. Zumindest 60 % des Teilchen, vorzugsweise jedoch zumindest 80 % der Teilchen liegen in dem Bereich zwischen 5 und 25 μm. Größere Anteile von Teilchen mit einer Größe von unterhalb 5 μm führen zwar zu Lackschichten mit vermindertem Glanz und verminderter Farbkraft, sie beeinträchtigen jedoch nicht den Klarlackstand, so daß Abweichungen der Pigmentdurchmesser nach unten durchaus toleriert werden können. Wichtig ist jedoch, daß der Bereich nach oben deutlich abgegrenzt ist. Vorzugsweise haben daher weniger als 0,5 % der Teilchen einen Durchmesser von mehr als 40 μm, wenn möglich sollte darauf geachtet werden, daß möglichst überhaupt keine Teilchen diesen Durchmesser überschreiten.

Die verwendeten Perlglanzpigmente bestehen aus blättchen- bzw. schuppenartigen Teilchen, die eine im Verhältnis zur Länge und Breite relativ geringe Dicke besitzen. Der Teilchendurchmesser, auf den hier Bezug genommen wird, ist daher der durch die Länge bzw. Breite der Teilchen gebildete größte Durchmesser.

Die verwendeten Pigmente sind an sich bekannt oder können nach bekannten Verfahren hergestellt werden. Solche Verfahren sind z. B. beschrieben in den deutschen Patentschriften 1 467 468 und 2 009 566. Dabei werden Glimmerplättchen mit Metalloxiden, insbesondere mit Titandioxid, in einer Schichtdicke belegt, die zur Erzeugung von Interferenzfarben erster, zweiter oder auch höherer Ordnung geeignet ist. Diese Pigmente können neben Titandioxid noch Zusätze anderer farbloser oder auch gefärbter Metalloxide in der Schicht oder darauf enthalten oder können durch Vor- oder Nachbehandlungen gegenüber Witterungseinflüssen stabilisiert werden, sowie mit farbigen Überzügen versehen werden. Solche Pigmente sind beispielsweise beschrieben in den deutschen Offenlegungsschriften 2 244 298, 2 313 331, 2 313 332, 2 429 762, 2 522 573, 2 928 287, 2 060 850, 2 106 613 und 2 215 191. Im Hinblick auf die Verwendung in Autolacken sind die besonders licht- und wetterbeständigen Rutilpigmente entsprechend den deutschen Offenlegungsschriften 2 214 545 und 2 522 572 besonders bevorzugt. Um die Pigmente in der erfindungsgemäßen Teilchengröße zu erhalten, wird lediglich das Ausgangsmaterial, in der Regel weißer Glimmer des Muscovit-Typs, durch Vermahlen und Klassieren in der gewünschten Teilchengrößenverteilung gewonnen. Da der Teilchendurchmesser durch die Belegung mit Metalloxiden kaum verändert wird, ist diese Teilchengrößenverteilung mit der des daraus gewonnenen Pigments praktisch identisch.

Die so gewonnenen Pigmente können dann auf übliche Weise in konventionelle Lacksysteme eingearbeitet werden. In der Regel wird dafür ein in 1-15 Minuten physikalisch trocknender Lack verwendet. Er enthält als Bindemittel ölfreie oder ölhaltige Polyester oder hitzehärtbare Acrylatharze, gegebenenfalls im Gemisch mit Melaminharzen, wie sie bei der Serienlackierung in Automobilfabriken oder Reparaturwerkstätten üblich sind. Zusätzlich zu diesen Bindemitteln können Celluloseäther und/oder -ester bzw. -halbester, insbesondere Celluloseacetobutyrat, eingesetzt werden. Die Bindemittel und sonstigen lacktechnischen Zusatzstoffe und Lösungsmittel, die zur Vervollständigung der Rezeptur benötigt werden, sind dem Fachmann geläufig. Insbesondere können die Lacke analog den für Metallic-Basis-Lacke üblichen Zusammensetzungen hergestellt werden.

Die erfindungsgemäßen Lacke enthalten zur Erzeugung eines Metallic-Effekts keine Aluminiumbronzen sondern Glimmerpigmente. Diese werden in der Regel in einer Menge von etwa 0,5 bis etwa 10 Gew.%, bezogen auf den Basislack bei Applikationsviskosität (üblicherweise 16-18 sec Din A4), bzw. 5 bis 30 Gew.% bezogen auf den Festkörpergehalt im Basislack zugesetzt.

Neben den Perlglanzpigmenten können auch andere transparente Farbpigmente dem Lack zugefügt werden. Wenn dazu eine andere Farbe als die Interferenzfarbe des Perlglanzpigmentes gewählt wird, führt dies zu interessanten Changiereffekten, wobei je nach Blickwinkel die Farbe des Farbpigmentes oder die Interferenzfarbe des Perlglanzpigmentes dominiert.

Die erfindungsgemäßen Lacke können wie die bisher bekannten Lacke aufgetragen werden, z. B. also durch elektrostatische oder konventionelle Spritzverfahren. In der Regel wird der Perlglanzpigmente enthaltende Basislack in Schichtdicken von etwa 10 bis 30 μm aufgetragen. Nach Ablüften von 2 bis 5 Minuten — wie es in der Autoindustrie üblich ist — wird auf den erfindungsgemäßen Basislack noch eine Klarlackschicht in einer Dicke von etwa 20-40 μm aufgetragen. Nach dem Einbrennen bei in der Autoindustrie üblichen Bedingungen von 30 bis 20 Minuten bei 120 bis 150 °C sind die Lackierungen gebrauchsfertig. Die Lackierung weist einen sehr guten Klarlackstand auf, so daß mit der vorliegenden Erfindung ein wesentlicher Fortschritt auf dem Gebiet der Autolacke erzielt wird.

In den nun folgenden Beispielen sind alle Anteile als Gewichtsteile definiert. In den Beispielen werden folgende Farbpigmentpasten verwendet.

1. Schwarzpaste 1

45 Teile Celluloseacetobutyrat, 20 %ig in Butylacetat ; 24 Teile Dynapol H 704, 65 %ig in Xylol ;
6 Teile Maprenal MF 600, 55 %ig in Butanol/Xylol ;
5 Teile Spezialschwarz IV ; 9 Teile Butylacetat ;
11 Teile Xylol

2. Schwarzpaste 2

Zusammengesetzt wie Schwarzpaste 1, nur anstelle von 5 Teilen Spezialschwarz IV sind 5 Teile Ruß FW 200 enthalten

3. Weißpaste

32 Teile Titandioxid, Titan RN 59 ; 39,2 Teile Celluloseacetobutyrat, 20 %ig in Butylacetat ; 25,6 Teile Dynapol H 704, 65 %ig in Xylol ; 3,2 Teile Xylol

4. Blaupaste 1

9 Teile Irgazinblau 3 GT ; 45 Teile Celluloseacetobutyrat, 20 %ig in Butylacetat ; 24 Teile Dynapol H 704, 65 %ig in Xylol ; 12 Teile Butylacetat, 10 Teile Xylol

5. Blaupaste 2

10 Teile Paliogenblau L 6 470 ; 50 Teile Celluloseacetobutyrat, 20 %ig in Butylacetat ; 26 Teile Dynapol H 704, 65 %ig in Xylol ; 9 Teile Butylacetat ; 5 Teile Xylol

Beispiel 1

Zu 14,75 Teilen Celluloseacetobutyrat 20 %ig in Butylacetat werden 15,5 Teile Additol XL 460 ; 1 Teil Maprenal MF 600, 25 %ig in Butanol/Xylol und 10,3 Teile Dynapol H 704, 65 %ig in Xylol gegeben. Dazu werden 18,5 Teile einer 6 %igen AC-Copolymer 405-Lösung in Butylacetat/Xylol gegeben sowie 4,5 Teile einer 50 %igen Ultramoll 1-Lösung in Xylol, 0,3 Teile Baysilonöl OL, 10 %ig in Xylol, 3,5 Teile GB-Ester und 1,5 Teile Äthylglykol. Danach werden 25 Teile Schwarzpaste 2 untergemischt und 5 Teile eines nach dem Verfahren der DOS 2 522 572 hergestellten Rutilpigmentes mit grüner Interferenzfarbe mit einer Teilchengrößenverteilung, bei der zumindest 80 % der Teilchen im Bereich von 5 bis 15 μm liegen (Glimmer 26 %, $TiO_2$ 70,5 %, $SnO_2$ 3,5 %) eingerührt. Der so erhaltene Basislack kann nach dem Verdünnen mit Butylacetat 85 % auf 16-18 Sekunden DIN A 4 im konventionellen oder elektrostatischen Spritzverfahren appliziert werden. Nach 3 bis 6 Minuten Ablüftzeit, wird dieser Basislack mit einem Melamin/Acrylharz-Klarlack in einer Schichtdicke von 30 bis 40 μm überlackiert und bei Brennbedingungen von 30 bis 20 Minuten bei 120 bis 150 °C eingebrannt. Die mit diesem Lack erhaltene Beschichtung zeigt einen sehr guten Klarlackstand und einen Grün-Schwarz-Changiereffekt.

Beispiel 2

Es wird analog Beispiel 1 ein Basislack gemischt, der jedoch anstelle von Schwarzpaste 2 die gleiche Gewichtsmenge Schwarzpaste 1 enthält und anstelle des grünen Interferenzpimentes 5 Teile eines nach der DOS 2 522 572 hergestellten Kupfer-farbenen Rutilpigmentes mit einer Teilchengrößenerteilung, die bei der zumindest 80 % der Teilchen im Bereich von 5 bis 15 μm liegen (Glimmer 39 %, $TiO_2$ 56 %, $SnO_2$ 5 %). Die entsprechend Beispiel 1 aufgebrachten Lackschichten zeigen einen guten Klarlackstand und einen Schwarz-Kupfer-Changiereffekt.

Beispiel 3

Zu 11 Gewichtsteilen Celluloseacetobutyrat, 20 %ig in Butylacetat, werden 15,5 Teile Additol XL 460, 2,1 Teile Maprenal MS 600, 55 %ig in Butanol/Xylol und 8,5 Teile Dynapol H 704, 65 %ig in Xylol gegeben. Anschließend werden 17 Teile AC Copolymer, 4,35 Teile Ultramoll 1, 4 Teile GB-Ester, 1,5 Teile Ethylglykol und 0,3 Teile Baysilonöl OL hinzugefügt. Danach werden 20,25 Teile Blaupaste 2, 4,5 Teile Blaupaste 1, 0,75 Teile Weißpaste und 5 Teile eines nach der DOS 2 522 572 hergestellten Goldpigmentes mit der Teilchengrößenverteilung, bei der zumindest 80 % der Teilchen im Bereich 5 bis 15 μm liegen (Glimmer 43 %, $TiO_2$ 51 %, $SnO_2$ 6 %) unter Rühren zugefügt. Applizierung entsprechend Beispiel 1 ergibt einen Lack mit sehr gutem Klarlackstand und einem Blau-Gold-Changiereffekt.

Die in den Beispielen verwendeten Warenzeichen haben folgende Bedeutung :

Dynapol H 704     gesättigtes Polyesterharz mit einer OH-Zahl von 80-102 der Dynamit-Nobel AG

Maprenal MF 600     butyliertes Melanninharz hoher Reaktivität der Hoechst AG

| | |
|---|---|
| Spezialschwarz IV | feiner Ruß mit einer Korngröße um 0,1 μm |
| Ruß FW 200 | feiner Ruß mit einer Korngröße um 0,1 μm |
| | der Degussa |
| Titan RN 59 | Titandioxid, Rutilform, stabilisiert |
| | der Titangesellschaft |
| Irgazinblau 3 GT | organisches Blaupigment |
| | transparent ausgemahlen |
| | der Ciba-Geigy AG |
| Paliogenblau L 6 470 | organisches Blaupigment |
| | transparent ausgemahlen |
| | der BASF AB |
| Additol XL 460 | Verlaufmittel (Melam inharz |
| | 20 %ig in höhersiedenden |
| | Alkoholen) |
| | der Hoechst AG |
| AC-Copolymer 405 | Fixiermittel für plättchenförmige |
| | Pigmente (Polyäthylenwachs, lösliche |
| | in organischen Lösungsmitteln) |
| | von Nordmann u. Rassmann |
| Ultramoll 1 | Weichmacher |
| | der BASF AG |
| Baysilonöl OL | Verlaufmittel (hydroxyfunktionelles |
| | Silikonöl) der Bayer AG |
| GB-Ester | Ester als Lösungsmittel |
| | der Hoechst AG |

**Patentansprüche**

1. Verfahren zum Lackieren von Objekten mit einer eine Basislack-Schicht und eine darauf befindliche Klarlack-Schicht enthaltenden Mehrschichtlackierung, wobei der Basislack zumindest ein Perglanzpigment auf der Grundlage von mit Metalloxiden beschichteten Glimmerschuppen enthält, dadurch gekennzeichnet, daß Perlglanzpigmente mit einer Teilchengröße im wesentlichen zwischen 5 und 25 μm enthalten sind.

2. Verfahren nach Anspruch 1, dadurch gekennzeichnet, daß zumindest 80 % der Perglanzpigmentteilchen eine Größe zwischen 5 und 25 μm besitzen.

3. Verfahren nach Anspruch 1 oder 2, dadurch gekennzeichnet, daß weniger als 0,5 % der Perlglanzpigmentteilchen eine Größe von oberhalb 40 μm besitzen.

4. Basislack für eine Mehrschichtlackierung, die eine Basislack-Schicht und eine darauf befindliche Klarlack-Schicht enthält, dadurch gekennzeichnet, daß er mit Perlglanzpigmenten auf der Grundlage von mit Metalloxiden beschichteten Glimmerschuppen einer Teilchengröße im wesentlichen zwischen 5 und 25 μm pigmentiert ist.

5. Basislack gemäß Anspruch 4, dadurch gekennzeichnet, daß zumindest 80 % der Teilchen der Perlglanzpigmente eine Größe zwischen 5 und 25 μm besitzen.

6. Basislack gemäß Anspruch 4 oder 5, dadurch gekennzeichnet, daß weniger als 0,5 % der Teilchen der Perlglanzpigmente eine Größe von oberhalb 40 μm besitzen.

7. Verwendung von Perlglanzpigmenten auf der Grundlage von mit Metalloxiden beschichteten Glimmerschuppen mit einer Teilchengröße von im wesentlichen zwischen 5 und 25 μm zu Pigmentie-rung von Basislacken für eine Mehrschichtlackierung, die eine Basislack-Schicht und eine Klarlack-Schicht enthält.

**Claims**

1. Process for lacquering objects with a multi-layer lacquering containing a layer of base lacquer and a layer of clear lacquer on top of this, the base lacquer containing at least one nacreous pigment based on mica flakes coated with metal oxides, characterised in that the base lacquer contains nacreous pigments having a particle size essentially between 5 and 25 μm.

2. Process according to Claim 1, characterised in that at least 80 % of the nacreous pigment particles are between 5 and 25 μm in size.

3. Process according to Claim 1 or 2, characterised in that less than 0.5 % of the nacreous pigment particles are above 40 μm in size.

4. Base lacquer for a multi-layer lacquering containing a layer of base lacquer and a layer of clear lacquer on top of this, characterised in that it is pigmented with nacreous pigments which are based on mica flakes coated with metal oxides and have a particle size essentially between 5 and 25 μm.

5. Base lacquer according to Claim 4, characterised in that at least 80 % of the particles of the nacreous pigments are between 5 and 25 μm in size.

6. Base lacquer according to Claim 4 or 5, characterised in that less than 0.5 % of the particles of nacreous pigments are above 40 μm in size.

7. Use of nacreous pigments which are based on mica flakes coated with metal oxides and have a particle size essentially between 5 and 25 μm for pigmenting base lacquers for a multi-layer lacquering containing a layer of base lacquer and a layer of clear lacquer.

**Revendications**

1. Procédé de laquage d'objets avec un laquage multicouche comprenant une couche de peinture de base et une couche de vernis transparent située sur elle, dans lequel la peinture de base contient au moins un pigment nacré à base de paillettes de mica revêtues d'oxydes métalliques, caractérisé en ce que les pigments nacrés sont présents avec une granulométrie comprise pour l'essentiel entre 5 et 25 μm.

2. Procédé selon la revendication 1, caractérisé en ce qu'au moins 80 % des particules de pigments nacrés possèdent une taille comprise entre 5 et 25 μm.

3. Procédé selon la revendication 1 ou 2, caractérisé en ce que moins de 0,5 % des particules de pigments nacrés possèdent une taille supérieure à 40 μm.

4. Peinture de base pour un laquage multicouche qui contient une couche de peinture de base et une couche de vernis transparent située sur elle, caractérisée en ce qu'elle est pigmentée avec des pigments nacrés à base de paillettes de mica revêtues d'oxydes métalliques d'une granulométrie comprise pour l'essentiel entre 5 et 25 μm.

5. Peinture de base selon la revendication 4 caractérisée en ce qu'au moins 80 % des particules des pigments nacrés possèdent une taille comprise entre 5 et 25 μm.

6. Peinture de base selon la revendication 4 ou 5 caractérisée en ce que moins de 0,5 % des particules des pigments nacrés posèdent une taille supérieure à 40 μm.

7. Utilisation de pigments nacrés à base de paillettes de mica revêtues d'oxydes métalliques avec une granulométrie comprise pour l'essentiel entre 5 et 25 μm pour pigmenter des peintures de base pour un laquage multicouche comprenant une couche de base et une couche de vernis transparent.